# EUROPÄISCHE PATENTANMELDUNG

(11) **EP 1 219 263 A2**
(43) Veröffentlichungstag der Anmeldung: **03.07.2002**
(21) Anmeldenummer: 01124161.9
(22) Anmeldetag: 10.10.2001
(51) Int. Cl.: A61C 5/06

(54) **Vorrichtung für das Füllen von Hohlräumen**

(30) Priorität: 21.12.2000 DE 10064005
(71) Anmelder: Firma Ivoclar Vivadent AG, 9494 Schaan (LI)
(72) Erfinder: Bopp, Gabriela, Dr., 6811 Göfis (AT); Radl, Andreas, Dr., 9494 Schaan (LI); Senn, Brunno, 9470 Buchs (CH); Rohner, Gottfried, 9450 Altstätten (CH)
(74) Vertreter: Baronetzky, Klaus, Dipl.-Ing.

(57) **Zusammenfassung**

Eine Füllvorrichtung für das Füllen von Hohlräumen, insbesondere in Zähnen oder Zahnersatzteilen, ist mit einem Füllraum für die Aufnahme von Füllmasse und mit einem Saugkanal versehen, mit welchem Unterdruck in einem Adapterkanal (54), über den Adapterkanal (54) in dem Hohlraum und in dem Füllraum (26) erzeugbar ist. Der Adapterkanal (54) erstreckt sich durch den Adapter (30) bis zum Hohlraum hin. Eine Umschaltvorrichtung (35) ist für das Umschalten zwischen dem Saugkanal und dem Füllraum (26) vorgesehen. Sie ist durch das Ausüben von Druck auf den Adapter (30) aus Richtung des Hohlraums betätigbar.

## Beschreibung

Die Erfindung betrifft eine Füllvorrichtung für das Füllen von Hohlräumen, insbesondere in Zähnen und Zahnersatzteilen, gemäß dem Oberbegriff von Anspruch 1.

Es ist bereits eine Füllvorrichtung für das Füllen von Zähnen vorgeschlagen worden, die einen Sauganschluss aufweist, über den ein Hohlraum in dem Zahn zunächst unter Unterdruck gesetzt werden soll. Durch Betätigung eines oberhalb des Sauganschlusses angeordneten Hebels soll aus einem zwischen Hebel und Sauganschluss vorgesehenen Füllraum Füllmasse durch den erzeugten Unterdruck in den Zahn und in den dort bestehenden Hohlraum eindringen.

Diese Lösung hat sich in der Praxis nicht durchgesetzt, da der Füllraum praktisch in der Verlängerung des Füllkanals angeordnet sein muss, was eine entsprechend große Bauhöhe bedingt. Zusätzlich ist oberhalb des Füllraums noch der Betätigungshebel angeordnet, so dass der Zahnarzt nur mit großer Geschicklichkeit die erwünschte Betätigung realisieren kann. Hinzu kommt, dass ein vorstehender und sperriger Betätigungshebel nicht mundgerecht ist und auch nicht ausgeschlossen ist, dass der Patient unwillkürlich und versehentlich den Betätigungshebel bereits vorzeitig mit der Zunge auslöst.

Ferner ist es aus der DE-OS 40 11 568 bekannt geworden, speziell den Apex eines Zahns über eine Füllvorrichtung zu befüllen. Diese Lösung soll das Füllmaterial möglichst tief in den Wurzelkanal einbringen. Bei dieser Lösung ist zwar der Füllstift unter Unterdruck gesetzt, so dass die Füllmasse dort blasenfrei geführt werden kann. Der Hohlraum selbst steht jedoch unter Umgebungsdruck, so dass es sehr schwierig ist, keine Blasen beim Füllvorgang entstehen zu lassen. Insbesondere muss der Füllstift kontrolliert aus dem Wurzelkanal herausgezogen werden, während zugleich Material genau in der Menge abgegeben werden muss, die der Bewegung des Füllstifts entspricht.

Insofern ist es nicht verwunderlich, dass sich auch diese Lösung nicht durchgesetzt hat.

Daher liegt der Erfindung die Aufgabe zugrunde, eine Füllvorrichtung gemäß dem Oberbegriff von Anspruch 1 zu schaffen, die besser zu handhaben ist, störungssicherer ist, aber dennoch eine verbesserte Akzeptanz für den Patienten mit sich bringt.

Diese Aufgabe wird erfindungsgemäß durch Anspruch 1 gelöst. Vorteilhafte Weiterbildungen ergeben sich aus den Unteransprüchen.

Besonders günstig ist es, daß die erfindungsgemäße Füllvorrichtung eine blasenfreie Füllung bei verbesserter Akzeptanz durch den Patienten ermöglicht. Dadurch, daß oberhalb der für die Füllung verwendeten Bohrung nur eine geringe Bauhöhe des Adapters vorliegt, läßt sich zunächst erreichen, daß auch die Molaren kauflächenseitig gefüllt werden können. Nachdem eine gesonderte Betätigung über einen vorragenden Hebel erfolgen muß, wird die Neigung des Zahnarztes, im Betätigen der Umschaltvorrichtung eine Verkantung des Adapters herbeizuführen, stark vermindert, so daß die Gefahr, daß die Luft angesaugt wird und damit Bläschen in der Füllung entstehen, praktisch ausgeschlossen ist.

Erfindungsgemäß läßt sich dies durch die Umschaltung mit einer natürlichen Bewegung, nämlich einer Erhöhung des Andrucks an den zu befüllenden Zahn, bewerkstelligen, ohne daß eine besondere Handhabung oder eine Zusatzbewegung durch die Hand des Zahnarztes erforderlich wäre.

Es versteht sich, daß der während des Evakuierens ausgeübte Druck und auch der Umschaltdruck in weiten Bereichen an die Erfordernisse angepasst ist, aber auch an die Wünsche des jeweiligen Zahnarztes anpassbar ist. Bevorzugt ist eine begrenzte Rastwirkung für die Umschaltvorrichtung vorgesehen, die deutlich macht, wenn die Umschaltung vorgenommen wird. Beispielsweise kann die für das Umschalten erforderliche Kraft auf das Dreifache der beim normalen Andruck des Adapters beim Evakuieren des Zahns erforderlichen Kraft festgelegt werden.

In einer vorteilhaften Ausgestaltung der Erfindung läßt sich die Umschaltkraft ohne weiteres durch Bemessung von Dichtringen des Arbeitskörpers einstellen, die gegen die Führungsbuchse des Arbeitskörpers wirken. Es ist möglich, zur Bereitstellung einer größeren Betätigungskraft für das Umschalten O-Ringe mit einer vergrößerten Stärke zu verwenden, und für die Bereitstellung einer geringeren Umschaltkraft O-Ringe mit einer verminderten Stärke. Ferner kann die Reibkraft gegenüber der Rastkraft ebenfalls feinfühlig durch entsprechende Ausgestaltung der Rastnuten eingestellt werden. Bevorzugt ist es vorgesehen, daß zwei im Abstand der Betätigung angeordnete Dichtungen übereinander an dem zylindrischen Arbeitskörper vorgesehen sind, die je nach Stellung des Arbeitskörpers in der Führungsbuchse in eine entsprechende Ringnut einrasten. Die Flankensteilheit der Ringnut entscheidet dann die reine Umschaltkraft.

Gemäß einem besonders günstigen Aspekt ist in dem erfindungsgemäßen Adapter lediglich ein einziger Adapterkanal vorgesehen, der sowohl als Saugkanal als auch in der Füllstellung als Füllkanal eingesetzt wird. Diese Lösung erlaubt eine deutlich verminderte Störanfälligkeit im Vergleich zu Lösungen mit zwei konzentrischen Kanälen, aber auch eine Verminderung des Herstellaufwands. Erfindungsgemäß bildet hierzu der Arbeitskörper selbst eine Schaltflanke, wobei in der ersten Stellung des Arbeitskörpers, der Saugstellung, ein Füllstutzen des Füllraums von dem Arbeitskörper, genauer gesagt, von der Schaltflanke, verschlossen ist. Demgegenüber ist in der zweiten Stellung, der Füllstellung, eine Arbeitsöffnung des Adapterkanals möglichst hindernisfrei zu dem Füllstutzen des Füllraums ausgerichtet, so daß die Füllmasse hindernisfrei in den Adapterkanal eintreten und von dort in den Hohlraum gelangen kann.

Erfindungsgemäß besonders günstig ist es, daß die Viskosität der Füllmasse dazu ausgenutzt wird, sie blasenfrei zu halten. Während grundsätzlich auch das Füllen des Füllraums über einen Druck auf einen Spritzenstempel möglich wäre, ist erfindungsgemäß eine Selbstansaugung der Füllmasse bevorzugt. Hierzu ist ein kleiner, aber definierter Spalt im Arbeitsbereich zwischen Arbeitskörper und Führungsbuchse vorgesehen. Über diesen Spalt wird Luft von einem Saugstutzen, der dem Füllraum direkt benachbart ist und sich im rechten Winkel zum Arbeitskörper erstreckt, aus dem Adapterkanal und damit aus dem Hohlraum in den Zahn oder Zahnersatzteil angesaugt. Zugleich wird Luft über den Spalt zwischen der Umschaltkante und dem Füllstutzen abgesaugt, so daß im Füllraum Unterdruck entsteht. Nachdem der Hohlraum mit dem Adapterkanal bei fest aufgesetztem Adapter einen geschlossenen Raum bildet, entsteht beim weiteren Ansaugen über den Sauganschluß eine Unterdruck in dem Füllraum, der aus einer Spritze bereitgestellte Füllmasse ansaugt, und zwar bis sie an dem Füllstutzen ansteht. Sobald dies der Fall ist, steigt der Unterdruck im Adapterkanal und damit auch im Saugstutzen weiter an, so daß durch die Druckerfassung festgestellt werden kann, wann der Adapter für das Umschalten bereit ist.

Erfindungsgemäß besonders günstig ist es, daß durch den Unterdruck im Adapterkanal zugleich auch der Adapter an die Öffnung in dem Zahn angesaugt wird. Die Abdichtung ist damit unkritisch, wobei es in sofern günstig ist, wenn der Winkel eines Außenkonuses an dem Adapter so gewählt ist, daß der Adapter nach dem Einstecken selbsthaltend ist.

In einer besonders bevorzugten Ausgestaltung der erfindungsgemäßen Lösung ist eine Mischwendel vorgesehen, die von der aus zwei Komponenten bestehenden Füllmasse durchtreten wird. Erfindungsgemäß geschieht dies durch die gemäß der vorstehenden Beschreibung erzeugte Saugkraft, so daß die Komponenten zugleich von Bläschen befreit werden. Die Mischwendel kann als Spirale ausgebildet sein, die in einem an ihren Außendurchmesser angepassten Zylinder aufgenommen ist. Durch das Hindurchsaugen der Füllmasse entsteht eine intensive Durchmischung, nachdem die Füllmasse dazu neigt, dem Spiralverlauf zu folgen, aber hierdurch Scherwirkungen unterworfen ist, denn durch geeignete Maßnahmen wie eine Verdrehsicherung ist sichergestellt, daß der Spritzenanschlußkörper, in dem die Spirale aufgenommen ist, sich nicht verdreht.

Die erfindungsgemäße Lösung erlaubt eine ausgesprochen preisgünstige Herstellung der Füllvorrichtung. Die aus Führungsbuchse samt Füllraum und Adapterkörper bestehende Einheit kann auch als Einwegteil realisiert sein. Es ist auch möglich, den Adapterkörper lösbar in der Führungsbuchse zu lagern, so daß die Reinigung erleichtert ist.

In einer weiteren, besonders günstigen Ausgestaltung der Erfindung ist es vorgesehen, an der Führungsbuchse neben dem Saugstutzen auch einen weiteren Stutzen anzubringen und dort den je anstehenden Unterdruck zu messen.

Weitere Vorteile, Einzelheiten und Merkmale ergeben sich aus den nachfolgenden Beschreibungen eines Ausführungsbeispiels der Erfindung an Hand der Zeichnung.

Es zeigen:
- Fig. 1: eine schematisierte Explosionsdarstellung einer erfindungsgemäßen Füllvorrichtung in einer Ausführungsform
- Fig. 2: eine perspektivische Darstellung der Ausführungsform gemäß Fig. 1 vor dem Zusammensetzen, jedoch aus einer ande: Blickrichtung als in Fig. 1;
- Fig. 3: die Ausführungsform gemäß wie bei 1 und 2, wobei die Einzelteile bereits bereits zusammengesetzt sind;
- Fig. 4: eine perspektivische Darstellung der aus Arbeitskörper, Führungsbuchse und Füllraum bestehenden Arbeitseinheit der Füllvorrichtung in der Ausführungsform gemäß Fig. 1 bis 3, wobei der Arbeitskörper sich in der Saugstellung befindet;
- Fig. 5: eine perspektivische Darstellung der aus Arbeitskörper, Führungsbuchse und Füllraum bestehenden Arbeitseinheit der Füllvorrichtung in der Ausführungsform gemäß Fig. 1 bis 3, wobei der Arbeitskörper sich in der Füllstellung befindet, jedoch aus einer anderen Perspektive;
- Fig. 6: ein Schnitt durch eine erfindungsgemäße Füllvorrichtung in der Füllstellung;
- Fig. 7: eine vergrößerte Darstellung eines Teils einer Arbeitseinheit für die erfindungsgemäße Füllvorrichtung, und zwar in der Saugstellung;
- Fig. 8: eine vergrößerte Darstellung eines Teils einer Arbeitseinheit für die erfindungsgemäße Füllvorrichtung, jedoch in der Füllstellung.

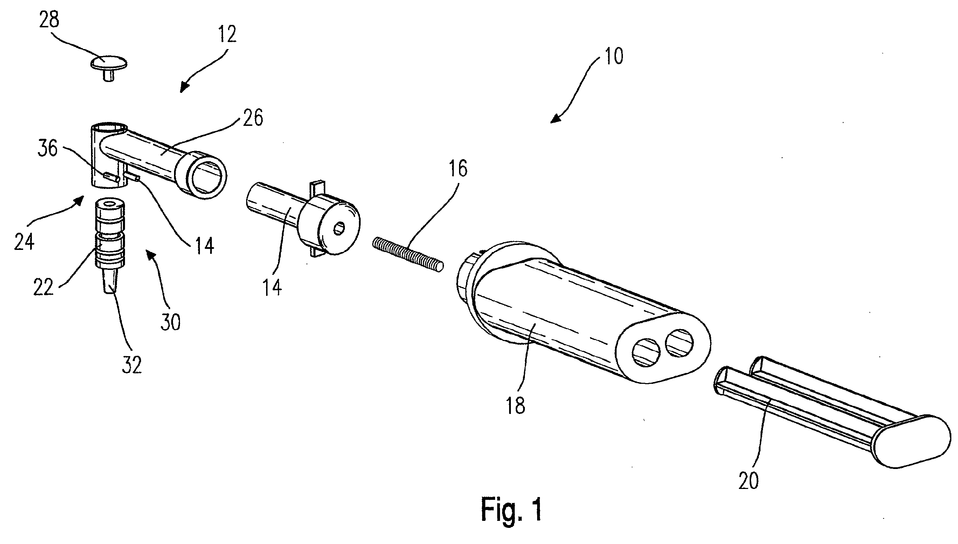

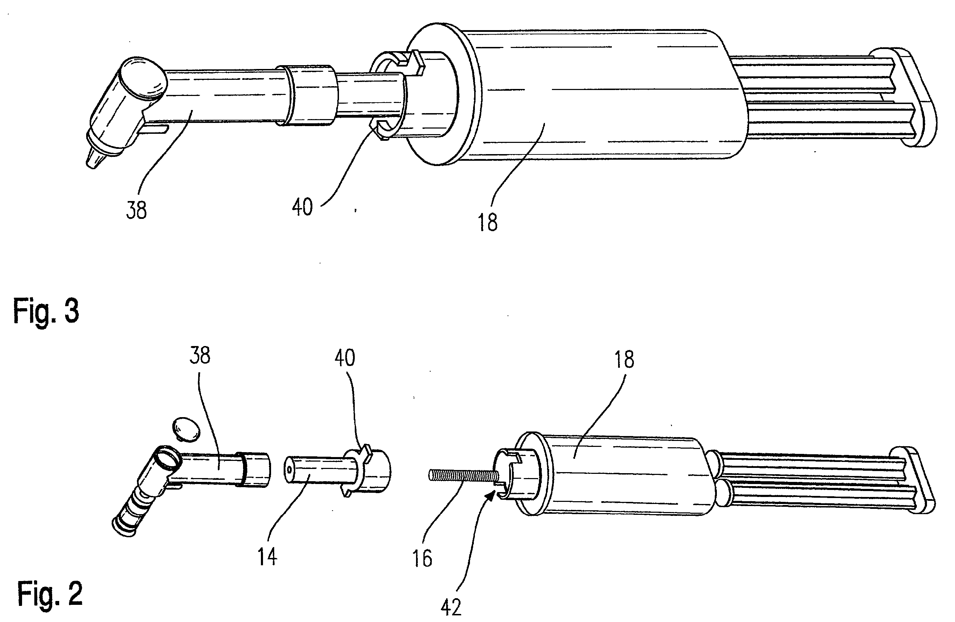

Die in Fig. 1 dargestellte Füllvorrichtung 10 weist eine Arbeitseinheit 12, einen Spritzenanschlußkörper 14, eine Mischwendel 16, einen Spritzenkörper 18 und einen Doppel-Spritzenstempel 20 auf. Im Anwendungsfall sind diese Teile gemäß Fig. 3 zusammengefügt und sind hier in Fig. 1 der Übersichtlichkeit halber in Explosionsdarstellung gezeigt.

Die Arbeitseinheit 12 besteht aus einem Arbeitskörper 22, einer Führungsbuchse 24, in der der Arbeitskörper 22 schiebebeweglich geführt ist, und einem Füllraum 26.

Der Arbeitskörper 22 weist ferner eine Betätigungskappe 28 auf, die ihn in der Führungsbuchse 24 hält. Der Arbeitskörper 22 bildet zusammen mit der Betätigungskappe 28 den Adapter 30 und weist an seinem unteren Ende einen Adapterkonus 32 auf. Der Adapterkonus 32 ist dafür bestimmt, in eine Bohrung in einem Zahn oder Zahnersatzteil eingesteckt zu werden, die ebenfalls konisch ausgebildet ist und einen Konuswinkel aufweist, der dem Konuswinkel des Adapterkonus entspricht.

Die Führungsbuchse 24 ist recht kurz gehalten und ist einstückig mit dem Füllraum 26 ausgebildet, wobei der Füllraum 26 im wesentlichen als Rohr ausgebildet ist, das sich seitlich von der Führungsbuchse wegerstreckt.

Unterhalb des Füllraums 26 ist ein Saugstutzen 34, dessen Funktion im einzelnen weiter unten beschrieben ist, und ein Druckmesstutzen 36 angeordnet.

Wie sich aus Fig. 2 recht gut ersehen läßt, kann der Spritzenanschlußkörper 14 teilweise in das Rohr 38, das den Füllraum 26 bildet, eingeschoben werden. An seinem Außenumfang ist eine Verdrehsicherung 40 vorgesehen, die in entsprechende Nuten 42 des Spritzenkörpers 18 eingreift. Vor dem Zusammenfügen des Spritzenanschlußkörpers 14 mit dem Spritzenkörper 18 wird die Mischwendel 16, die in Form einer Spirale ausgebildet ist, in den Spritzenanschlußkörper 14 eingeführt. Der Spritzenkörper 18 weist zwei Zylinder auf, die in Fig. 1 angedeutet sind und die je mit einer Komponente gefüllt sind.
Durch das intensive Durchmischen der beiden Komponenten entsteht die Füllmasse im Füllraum 26.

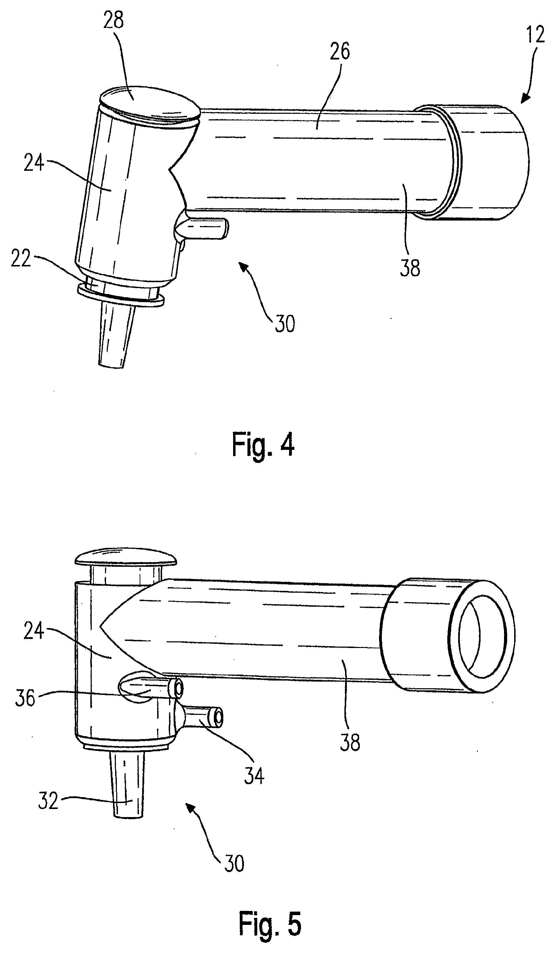

Die Arbeitseinheit 12 ist in den Figuren 4 und 5 etwas vergrößert dargestellt. In Fig. 4 ist die Saugstellung des Adapters 30 und in Fig. 5 die Füllstellung des Adapters 30 in der Führungsbuchse 24 ersichtlich. In der Saugstellung liegt die Betätigungskappe 28 flach an der Oberseite der Führungsbuchse 24 an. In dieser Stellung springt der Arbeitskörper 22 deutlich unten vor.

Hingegen erstreckt sich in der Füllstellung der Arbeitskörper 22 oben aus der Führungsbuchse 24, während in dieser Stellung unten lediglich der Adapterkonus 32 vorspringt.

Für das Umschalten zwischen der Saugstellung gemäß der Fig. 4 und der Füllstellung gemäß der Fig. 5 reicht es aus, wenn der Zahnarzt einen ganzen Druck von oben nach unten auf das Rohr 38 des Füllraums 26 ausübt. Hierdurch ist eine Umschaltvorrichtung 35 gebildet.

Wie insbesondere aus Fig. 5 ersichtlich ist, erstrecken sich der Druckmeßstutzen 36 und der Saugstutzen 34 sowohl auf einer anderen vertikalen Ebene als auch versetzt zueinander. Die Anschlüsse können so auf einer möglichst geringen Bauhöhe untergebracht werden, und dadurch, daß sich die beiden Stutzen 34 und 36 je seitlich etwas neben dem Rohr 38 erstrecken, sind die betreffenden Schläuche parallel zu dem Rohr 38 aus dem Mund des Patienten herauszuführen.

Die nicht dargestellten Schläuche stellen eine Verbindung zu einer Versorgungseinheit dar.

Das Rohr 38 weist - wie es besonders gut aus Fig. 5 ersichtlich ist - eine Verdrehsicherung 40 auf, der der Aufnahme und Abstützung des Spritzenanschlußkörpers 14 dient. Es versteht sich, daß hier eine spielfreie Passung und gegebenenfalls entsprechende Dichtvorrichtungen vorgesehen sind.

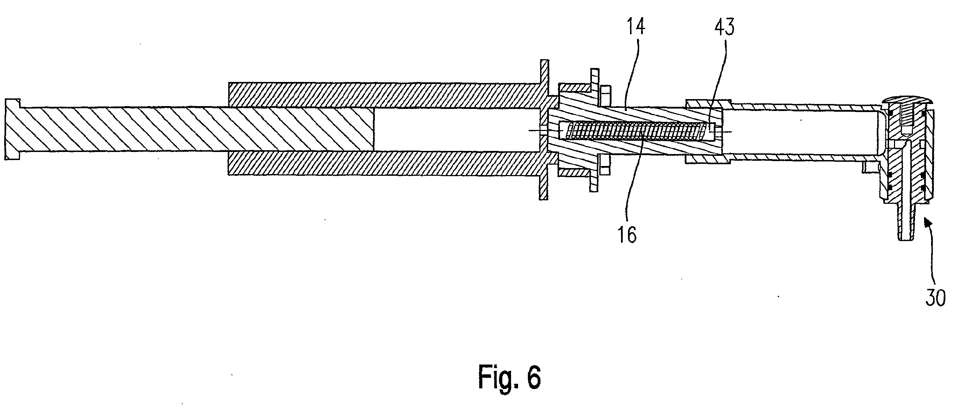

In Fig. 6 ist eine erfindungsgemäße Füllvorrichtung dargestellt, wobei der Adapter 30 dort die Füllstellung einnimmt. Es ist ersichtlich, daß die Mischwendel 16 einen zylindrischen Innenraum 43 des Spritzenanschlußkörpers 14 praktisch vollständig ausfüllt. Sie ist so bemessen, daß sie unter Federkraft an dem Innenraum 43 anliegt, jedoch bei Bedarf, z.B. zu Reinigungszwecken, entnommen werden kann.

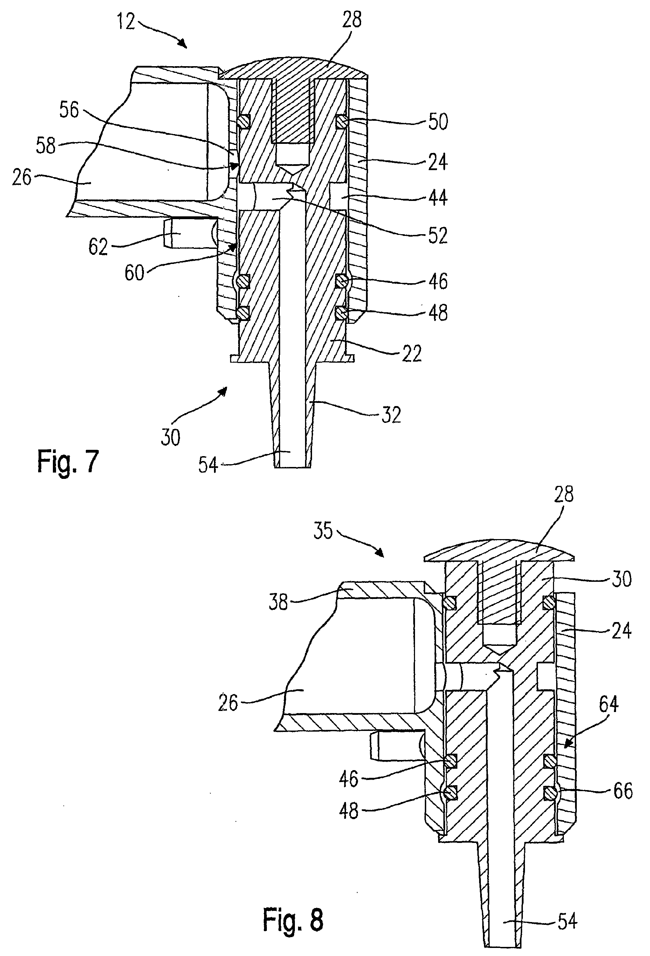

Aus Fig. 7 ist ersichtlich, wie der Adapter 30 in dem in die Führungbuchse 24 eingebauten Zustand im einzelnen ausgebildet ist. Der Arbeitskörper 22 des Adapters 30 ist im wesentlichen zylindrisch, weist jedoch eine recht große Ringnut 44, und zwar etwas oberhalb der Mitte auf. Er weist ferner eine erste Dichtung 46, eine zweite Dichtung 48 und eine dritte Dichtung 50 auf, die je als O-Ringe ausgebildet sind. Die Dichtungen 46-50 dichten zur Führungsbuchse 24 hin ab. Über eine nicht dargestellte Verdrehsicherung ist die Drehposition des Arbeitskörpers 22 in der Führungsbuchse 24 festgelegt. Der Arbeitskörper 22 weist ferner von der Ringnut 44 ausgehend und dem Füllraum 26 zugewandt eine Arbeitsöffnung 52 auf, die in einen Adapterkanal 54 mündet. Der Adapterkanal durchtritt den gesamten Arbeitskörper 22 und auch den Adapterkonus 32.

Der Füllraum 26 endet in einem Füllstutzen 56, der dem Arbeitskörper 22 zugewandt ist. Während er in der in Fig. 7 dargestellten Saugstellung von dem Arbeitskörper 22 und dessen dort befindliche Umschaltkante 58 verschlossen ist, ist er in der in Fig. 8 dargestellten Füllstellung zum Adapterkanal 54 hin offen.

Zwischen dem Arbeitskörper 22 und der Führungsbuchse 24 erstreckt sich ein Spalt 60 definierter Breite. An den Spalt 60 ist der Saugstutzen 62 angeschlossen, so daß in dem Spalt - und von dort ausgehend in weiteren Bereichen - Unterdruck vorliegt. Der Unterdruck gelangt in die Ringnut 44 und über diese in den Adapterkanal 54. Nachdem die Dichtung 50 auch in der Saugstellung gemäß Fig. 7 oberhalb des Füllstutzens 56 ist, gelangt der Unterdruck auch zu dem Füllstutzen 56 und von dort in den Füllraum 26. Dies führt dazu, daß über den Unterdruck nicht dargestellte Füllmasse angesaugt wird und an der Umschaltkante 58 ansteht. Die Viskosität der Füllmasse ist so groß, daß sie nicht in den Spalt 60 gelangen kann, solange der Arbeitskörper 22 sich in der Saugstellung befindet.

Für das Evakuieren des Hohlraums in dem Zahn oder Zahnersatzteil wird die Saugstellung gemäß Fig. 7 für einen gewissen Zeitraum, beispielsweise fünf Minuten oder mehr beibehalten. Hierdurch wird zunächst der Hohlraum und der Adapterkanal 54 evakuiert, wobei ein Restdruck von 10 bis 15 mbar ohne weiteres verbleiben kann. Der Unterdruck pflanzt sich in den Füllraum 26 fort und führt dazu, daß Masse von der Spritze durch die Mischwendel 16 angesaugt wird und den Füllraum 26 schließlich ausfüllt. Sobald dies geschehen ist, läßt sich keine weitere Luft mehr evakuieren, so daß der Saugvorgang abgeschlossen ist. Der Zahnarzt drückt dann von oben auf das Rohr 38, so daß die Füllstellung gemäß Fig. 8 erreicht wird. Das ruckartige Umschalten läßt die Füllmasse aus dem Füllraum 26 in den Adapterkanal 54 und von dort in den Hohlraum in dem Zahn einschießen. Nachdem dort starker Unterdruck besteht, wird der Füllraum so vollständig und blasenfrei gefüllt.

Für die Bereitstellung von definierten Umschaltpositionen ist eine erfindungsgemäße Rastvorrichtung 64 vorgesehen. Sie weist eine Ringnut 66 innen in der Führungsbuchse auf, die mit der ersten Dichtung 46 und der zweiten Dichtung 48 zusammenwirkt. In der ersten Stellung, der Saugstellung gemäß Fig. 7, erstreckt sich die erste Dichtung 46 in die Ringnut hinein. In dieser Stellung ist die erste Dichtung 46 freigestellt und der in dem Spalt 60 vorliegende Unterdruck kann gemessen werden, wobei die Messung über den Druckmessstutzen 36 erfolgen kann.

Für das Überführen des Adapters 30 in die zweite Stellung, die Füllstellung gemäß Fig. 8, wird nun die erste Dichtung 46 aus der Ringnut herausgedrückt, und beim Weiterdrücken gelangt die zweite Dichtung 48 in die Ringnut 66.

Der Abstand zwischen den Dichtungen 46 und 48 ist so bemessen, daß er größer als die Breite der Ringnut 66 ist, so daß stets eine Unterdruck-Abdichtung im Inneren der Arbeitseinheit 12 gewährleistet ist.

Die Betätigungskappe 28 ist - wie es aus Fig. 7 und 8 ersichtlich ist - in eine entsprechende Gewindeausnehmung des Arbeitskörpers 22 eingeschraubt. Zum Säubern des Arbeitskörpers 22 und der Arbeitseinheit 12 wird die Schraubverbindung gelöst, so daß sich der Arbeitskörper 22 von unten aus der Führungsbuchse 24 herausziehen läßt. Die Betätigungskappe 28 ist ballig ausgebildet, so daß sie handfreundlich ein Zurückumschalten von der Füllstellung gemäß Fig. 8 in die Saugstellung gemäß Fig. 7 für die Befüllung des nächsten Zahns ermöglicht.

## Patentansprüche

1. Füllvorrichtung für das Füllen von Hohlräumen, insbesondere in Zähnen oder Zahnersatzteilen, mit einem Füllraum für die Aufnahme von Füllmasse und mit einem Saugkanal, mit welchem Unterdruck in einem Adapterkanal, über den Adapterkanal in dem Hohlraum und in dem Füllraum erzeugbar ist, wobei der Adapterkanal durch den Adapter sich bis zum Hohlraum hin erstreckt, und mit einer Umschaltvorrichtung (35) für das Umschalten zwischen dem Saugkanal und dem Füllraum (26), **dadurch gekennzeichnet, dass** die Umschaltvorrichtung durch das Ausüben von Druck oder Gegendruck auf den Adapter (30) aus Richtung des Hohlraums betätigbar ist.

2. Füllvorrichtung nach Anspruch 1, **dadurch gekennzeichnet, dass** die Umschaltvorrichtung (35) einen Arbeitskörper (22) aufweist, der eine Arbeitsöffnung aufweist, die in einer ersten Stellung der Umschaltvorrichtung keine Überlappung mit einem Füllstutzen (56) des Füllraums und in einer zweiten Stellung eine Überlappung mit dem Füllstutzen (56) aufweist.

3. Füllvorrichtung nach einem der vorhergehenden Ansprüche, **dadurch gekennzeichnet, dass** die Umschaltvorrichtung (35) eine Führungsbuchse (24) für den Arbeitskörper (22) aufweist.

4. Füllvorrichtung nach einem der vorhergehenden Ansprüche, **dadurch gekennzeichnet, dass** zwischen einem Arbeitskörper und einer Führungsbuchse (24) der Umschaltvorrichtung (35) ein Spalt (60) ausgebildet ist, der eine Breite aufweist, die für das Evakuieren des Füllraums (26) ausreicht, jedoch zu schmal für das Durchtreten von Füllmasse durch ihn hindurch ist.

5. Füllvorrichtung nach einem der vorhergehenden Ansprüche, **dadurch gekennzeichnet, dass** der Adapter (30) einen Außenkonus (32) aufweist, der in seiner Form einer Bohrung zu dem Hohlraum hin entspricht.

6. Füllvorrichtung nach einem der vorhergehenden Ansprüche, **dadurch gekennzeichnet, dass** der Adapter (30) an seiner im Zahn dem Hohlraum zugewandten Außenseite mit einer Dichtung versehen ist.

7. Füllvorrichtung nach einem der vorhergehenden Ansprüche, **dadurch gekennzeichnet, dass** ein Spalt (60) zwischen einem Arbeitskörper (22) und einer Führungsbuchse (24) der Füllvorrichtung (10) als zylindrischer Ringspalt ausgebildet ist, der von Dichtungen (46/48) begrenzt ist, und dass der Spalt (60) sich über den Bereich der Mündung des Saugkanals und über den Füllstutzen (56) erstreckt.

8. Füllvorrichtung nach einem der vorhergehenden Ansprüche, **dadurch gekennzeichnet, dass** ein Arbeitskörper (22) in der Führungsbuchse (24) verschieblich gelagert ist und durch Druck auf eine Betätigungskappe (28), die dem Füllraum (26) gegenüber liegt, in die erste Stellung bringbar ist, in welcher der Arbeitskörper (22) den Füllstutzen (56) versperrt.

9. Füllvorrichtung nach einem der vorhergehenden Ansprüche, **dadurch gekennzeichnet, dass** eine Führungsbuchse (24) eine Ringnut (66) aufweist, in die sich in der ersten Stellung des Arbeitskörpers (22) eine erste Dichtung (46) und in der zweiten Stellung des Arbeitskörpers (22) eine zweite Dichtung (48) erstreckt, wobei die Ringnut (66) in Zusammenwirkung mit der ersten und der zweiten Ringdichtung eine Rastvorrichtung (64) für die erste und die zweite Stellung bildet.

10. Füllvorrichtung nach einem der vorhergehenden Ansprüche, **dadurch gekennzeichnet, dass** der Füllraum (26) an seiner von dem Füllstutzen (56) abgewandten Seite an eine Mischwendel (16) angeschlossen ist, über welche zwei die Füllmasse bildende Komponenten mischbar sind.

11. Füllvorrichtung nach Anspruch 10, **dadurch gekennzeichnet, dass** die Mischwendel (16) an eine Doppelspritze angeschlossen ist, die durch den Unterdruck in dem Füllraum (26) betätigbar ist.

12. Füllvorrichtung nach Anspruch 10 oder 11, **dadurch gekennzeichnet, dass** die Mischwendel (16) als in einen Spritzenanschlusskörper (14) eingelegte Spirale ausgebildet ist und dass der Spritzenanschlusskörper (14) eine Verdrehsicherung gegenüber der Spritze aufweist.

13. Füllvorrichtung nach einem der vorhergehenden Ansprüche, **dadurch gekennzeichnet, dass** die Führungsbuchse (24) und der Arbeitskörper (22) gegenüber der Anordnung aus Füllraum (26), Spritzenanschlusskörper(14) und Spritze abgewinkelt ist.

14. Füllvorrichtung nach einem der vorhergehenden Ansprüche, **dadurch gekennzeichnet, dass** eine Betätigungskappe (28) den Arbeitsweg des Arbeitskörpers (22) begrenzt und von dem Arbeitskörper (22) lösbar, insbesondere abschraubbar ist, und dass der Arbeitskörper (22) nach Lösen der Betätigungskappe (28) zu Reinigungszwecken aus der Führungsbuchse (24) herausziehbar ist.

15. Füllvorrichtung nach einem der vorgehenden Ansprüche, **dadurch gekennzeichnet, dass** eine Ringnut (66) vorgesehen ist, über welche in der ersten Stellung des Arbeitskörpers (22) der Unterdruck über den Druckmessstutzen messbar ist.

16. Verwendung einer Spritze, die mindestens einen Spritzenkörper und einen Spritzenstempel, insbesondere einen Doppel-Spritzenstempel aufweist, für die Füllvorrichtung gemäß einem der vorhergehenden Ansprüche.

17. Verfahren zum Füllen von Hohlräumen, insbesondere in Zähnen oder Zahnersatzteilen, bei dem Füllmasse in einem Füllraum aufgenommen wird und bei dem Unterdruck von einem Saugkanal in einem Adapterkanal und über den Adapterkanal in dem Hohlraum und in dem Füllraum erzeugt wird, wobei sich der Adapterkanal durch den Adapter bis zum Hohlraum hin erstreckt, wobei zwischen Saugkanal und Füllraum mit einer Umschaltvorrichtung umgeschaltet werden kann, **dadurch gekennzeichnet, dass** die Umschaltvorrichtung durch das Ausüben von Druck oder Gegendruck auf den Adapter aus Richtung des Hohlraums betätigt wird.

18. Verfahren nach Anspruch 17, **dadurch gekennzeichnet, dass** das Umschalten der Umschaltvorrichtung dadurch erfolgt, dass der Zahnarzt auf die Führungsbuchse oder eine mit ihr verbundene Einheit wie den Füllraum drückt, während der Adapter auf dem Zahn aufliegt.

19. Verfahren nach Anspruch 17 oder 18, **dadurch gekennzeichnet, dass** der an dem Adapter anstehende Unterdruck gemessen wird und beim Vorliegen eines ausreichenden Unterdrucks ein Signal für das Umschalten abgegeben wird.
